(19) Europäisches Patentamt
European Patent Office
Office européen des brevets

(11) EP 3 498 771 B1

(12) **EUROPEAN PATENT SPECIFICATION**

(45) Date of publication and mention of the grant of the patent:
**10.06.2020 Bulletin 2020/24**

(51) Int Cl.:
*C08L 9/00* (2006.01) *C08L 7/00* (2006.01)
*C08L 47/00* (2006.01) *C08K 3/04* (2006.01)
*C08L 21/00* (2006.01) *B60C 1/00* (2006.01)

(21) Application number: **18210669.0**

(22) Date of filing: **06.12.2018**

(54) **RUBBER COMPOSITION FOR TIRES AND PNEUMATIC TIRE**

KAUTSCHUKZUSAMMENSETZUNG FÜR REIFEN UND LUFTREIFEN

COMPOSITION DE CAOUTCHOUC POUR PNEUS ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2017 JP 2017239717**

(43) Date of publication of application:
**19.06.2019 Bulletin 2019/25**

(73) Proprietor: **Sumitomo Rubber Industries, Ltd.**
**Kobe-shi, Hyogo-ken 651-0072 (JP)**

(72) Inventors:
- **KASAI, Yuki**
  **Kobe-shi, Hyogo 651-0072 (JP)**
- **HIRO, Masataka**
  **Kobe-shi, Hyogo 651-0072 (JP)**
- **NISHI, Noriyuki**
  **Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**US-A- 4 732 927** **US-A1- 2014 005 319**
**US-A1- 2015 051 332** **US-A1- 2016 194 484**

- **DATABASE WPI Week 201781 Thomson Scientific, London, GB; AN 2017-801950 XP002789221, -& JP 2017 206710 A (SUMITOMO RUBBER IND LTD) 24 November 2017 (2017-11-24)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 498 771 B1

## Description

### TECHNICAL FIELD

The present invention relates to a rubber composition for tires and a pneumatic tire formed from the rubber composition.

### BACKGROUND ART

The materials of cold weather tires (winter tires) and all season tires have been designed with low temperature properties in mind. For example, Patent Literature 1 proposes a rubber composition containing a specific resin. However, there is a need for further improvement in performance on ice. Further, Patent Literature 2 discloses a rubber composition comprising a rubber component containing 60% by mass or more of a natural rubber and a carbon black having a CTAB of 140 to 160 $m^2/g$ and CTAB/IA of 0.85 to 1 $m^2/mg$. Patent Literature 3 discloses a rubber composition comprising a styrene-butadiene rubber, a high-cis polybutadiene rubber, natural rubber, a farnesene polymer and carbon black having $N_2SA$ of 5 to 200 $m^2/g$ and DBP of 5 to 300 ml/100g.

### CITATION LIST

### PATENT LITERATURE

Patent Literature 1: JP 2013-249423 A
Patent Literature 2: US 2014/005319 A1
Patent Literature 3: US 2016/194484 A1

### SUMMARY OF INVENTION

### TECHNICAL PROBLEM

The present invention aims to solve the problem and provide a rubber composition for tires which is excellent in performance on ice, and a pneumatic tire formed from the rubber composition.

### SOLUTION TO PROBLEM

The present invention relates to a rubber composition for tires, containing: a rubber component; a farnesene polymer; and a carbon black having a cetyltrimethylammonium bromide adsorption specific surface area of 140 $m^2/g$ or more and a ratio (CTAB/IA) of the cetyltrimethylammonium bromide adsorption specific surface area (CTAB) to an iodine adsorption number (IA) of 1.10 or higher, wherein the amount of the farnesene polymer per 100 parts by mass of the rubber component is 5 parts by mass or more, and wherein the amount of the carbon black per 100 parts by mass of the rubber component is 5 parts by mass or more.
The farnesene polymer is preferably a liquid farnesene polymer.
The farnesene polymer is preferably a copolymer of farnesene and butadiene.
The rubber component preferably includes, based on 100% by mass thereof, 30% by mass or more of an isoprene-based rubber and 30% by mass or more of a polybutadiene rubber.
Another aspect of the present invention relates to a pneumatic tire, including a tread formed from the rubber composition.
The pneumatic tire is preferably a cold weather tire or an all season tire.

### ADVANTAGEOUS EFFECTS OF INVENTION

The rubber composition for tires of the present invention contains a farnesene polymer and a specific carbon black together with a rubber component. The use of such a rubber composition provides pneumatic tires which are excellent in performance on ice.

DESCRIPTION OF EMBODIMENTS

The rubber composition for tires of the present invention contains a farnesene polymer and a specific carbon black together with a rubber component. Such a rubber composition provides improved performance on ice.
The aforementioned carbon black is characterized by being highly activated and highly effective in improving fracture resistance and abrasion resistance, but it tends to be inferior in dispersibility to conventional carbon blacks.
In the present invention, in contrast, it is considered that the farnesene polymer improves the dispersibility of the carbon black, thereby allowing the rubber composition to have a lower complex modulus (E*) at 0°C. Thus, the present invention has the effect of improving performance on ice.

(Rubber composition)

Examples of the rubber component used in the present invention include diene rubbers such as isoprene-based rubbers, polybutadiene rubber (BR), styrene-butadiene rubber (SBR), and styrene-isoprene-butadiene rubber (SIBR). The rubber component may include a single rubber or a combination of two or more rubbers. Among these, isoprene-based rubbers and BR are preferred, with combinations of isoprene-based rubbers and BR being more preferred.
Any BR may be used. Examples include high-cis BR and syndiotactic polybutadiene crystal-containing BR. These may be used alone or in combinations of two or more. The BR preferably has a cis content of 90% by mass or higher for good abrasion resistance.
The BR may be an unmodified BR or a modified BR. These may be used alone or in combinations of two or more.
The modified BR may be any BR having a functional group interactive with a filler such as silica. For example, it may be a chain end-modified BR obtained by modifying at least one chain end of a BR with a compound (modifier) having the functional group (i.e., a chain end-modified BR terminated with the functional group); a backbone-modified BR having the functional group in the backbone; a backbone- and chain end-modified BR having the functional group in both the backbone and chain end (e.g., a backbone- and chain end-modified BR in which the backbone has the functional group and at least one chain end is modified with the modifier); or a chain end-modified BR that has been modified (coupled) with a polyfunctional compound having two or more epoxy groups in the molecule so that a hydroxyl or epoxy group is introduced thereinto. These modified BRs may be used alone or in combinations of two or more.
Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Among these, the functional group is preferably an amino group (preferably an amino group whose hydrogen atom is replaced with a C1-C6 alkyl group), an alkoxy group (preferably a C1-C6 alkoxy group), or an alkoxysilyl group (preferably a C1-C6 alkoxysilyl group) in order to more suitably achieve the effects of the present invention.
The BR may be, for example, a product of Ube Industries, Ltd., JSR Corporation, Asahi Kasei Corporation, or Zeon Corporation.
The amount of the BR, if present, based on 100% by mass of the rubber component is preferably 30% by mass or more, more preferably 40% by mass or more, but is preferably 70% by mass or less, more preferably 60% by mass or less, still more preferably 45% by mass or less. When the amount falls within the range indicated above, the effects of the present invention tend to be better achieved.
Examples of the isoprene-based rubbers include natural rubber (NR), polyisoprene rubber (IR), refined natural rubber, modified NR, and modified IR. The NR may be one commonly used in the tire industry such as SIR20, RSS#3, or TSR20. Non-limiting examples of the IR include those commonly used in the tire industry, such as IR2200. Examples of the refined natural rubber include highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These isoprene-based rubbers may be used alone or in combinations of two or more. Among these, natural rubber (NR) is preferred.
The amount of the isoprene-based rubber, if present, based on 100% by mass of the rubber component is preferably 30% by mass or more, more preferably 40% by mass or more, still more preferably 55% by mass or more, but is preferably 70% by mass or less, more preferably 60% by mass or less. When the amount falls within the range indicated above, the effects of the present invention tend to be better achieved.
The combined amount of the isoprene-based rubber and BR based on 100% by mass of the rubber component is preferably 60% by mass or more, more preferably 80% by mass or more, still more preferably 90% by mass or more, and may be 100% by mass. When the combined amount falls within the range indicated above, the effects of the present invention tend to be better achieved.
The rubber composition contains a specific carbon black.
The carbon black has a cetyltrimethylammonium bromide adsorption specific surface area (CTAB) of 140 $m^2/g$

or more, preferably 145 $m^2/g$ or more, but preferably 150 $m^2/g$ or less, more preferably 148 $m^2/g$ or less. When the CTAB falls within the range indicated above, the effects of the present invention can be suitably achieved.

Herein, the CTAB of the carbon black is measured in accordance with JIS K6217-3:2001.

The carbon black preferably has an iodine adsorption number (IA) of 120 mg/g or more, more preferably 123 mg/g or more, but preferably 135 mg/g or less. When the IA falls within the range indicated above, the effects of the present invention can be suitably achieved.

Herein, the IA of the carbon black is measured in accordance with JIS K6217-1:2008.

The carbon black has a ratio (CTAB/IA) of CTAB to IA of 1.10 or higher, preferably 1.12 or higher, but preferably 1.20 or lower, more preferably 1.18 or lower. When the ratio falls within the range indicated above, the effects of the present invention can be suitably achieved.

The surface activity index defined by the CTAB/IA ratio may be taken as an index of crystallinity (graphitization degree) of carbon black. Specifically, a higher CTAB/IA ratio indicates a lower crystallinity which tends to lead to a greater interaction between the carbon black and the rubber component.

The CTAB/IA ratio may also be used as a parameter to assess the number of acidic functional groups present on the carbon black surface. The acidic functional groups on the carbon black surface contribute to the interaction with the rubber component. A higher CTAB/IA ratio indicates a larger number of acidic functional groups present on the carbon black surface. Thus, when the CTAB/IA ratio falls within the range indicated above, the carbon black can have a more significant reinforcing effect on the rubber component, and the effects of the present invention can be suitably achieved.

The carbon black preferably has a nitrogen adsorption specific surface area ($N_2SA$) of 140 $m^2/g$ or more, more preferably 145 $m^2/g$ or more, but preferably 150 $m^2/g$ or less, more preferably 148 $m^2/g$ or less. When the $N_2SA$ falls within the range indicated above, the effects of the present invention can be suitably achieved.

Herein, the $N_2SA$ of the carbon black is measured in accordance with JIS K6217-2:2001.

The carbon black preferably has a dibutyl phthalate absorption number of compressed sample (24M4 DBP) of 110 ml/100 g or more, but preferably 120 ml/100 g or less, more preferably 115 ml/100 g or less. When the 24M4 DBP falls within the range indicated above, the effects of the present invention can be suitably achieved.

Herein, the 24M4 DBP of the carbon black is measured in accordance with ASTM D3493-85a.

The carbon black preferably has a dibutyl phthalate absorption (DBP) of 127 ml/100 g or more, more preferably 129 ml/100 g or more, but preferably 141 ml/100 g or less, more preferably 135 ml/100 g or less. When the DBP falls within the range indicated above, the effects of the present invention can be suitably achieved.

Herein, the DBP of the carbon black is measured in accordance with JIS K6217-4:2001.

Once these target properties are selected, a person skilled in the art can produce such carbon black by known methods . The production method is not particularly limited. Specifically, it preferably includes spraying a feedstock oil into combustion gas to produce carbon black. Examples of such methods include furnace processes, channel processes, and other conventional processes. Among these, the below-described furnace process is preferred.

The furnace process (oil furnace process), as described in, for example, JP 2004-43598 A and JP 2004-277443 A (both of which are hereby incorporated by reference in their entirety), uses an apparatus having a combustion zone where a high-temperature combustion gas stream is generated in a reaction furnace, a reaction zone where a feedstock hydrocarbon is introduced into the high-temperature combustion gas stream to convert the feedstock hydrocarbon into carbon black by pyrolysis, and a quench zone where the reaction gas is rapidly cooled to terminate the reaction. This process can produce various types of carbon black with different properties by controlling conditions such as combustion conditions, the flow rate of high-temperature combustion gas, the conditions for introducing the feedstock oil into the reaction furnace, or the time from the carbon black conversion to the termination of the reaction.

In the combustion zone, air, oxygen, or a mixture thereof as oxygen-containing gas and a gaseous or liquid fuel hydrocarbon may be mixed and combusted to form high-temperature combustion gas. Examples of the fuel hydrocarbon include carbon monoxide, natural gas, coal gas, petroleum gas, petroleum liquid fuels such as heavy oil, and coal liquid fuels such as creosote oil. The combustion is preferably controlled so that the combustion temperature is in the range of 1400°C to 2000°C.

In the reaction zone, a feedstock hydrocarbon may be introduced into the high-temperature combustion gas stream formed in the combustion zone, by spraying from parallel or laterally disposed burners to pyrolyze and convert the feedstock hydrocarbon into carbon black. Preferably, a feedstock oil is introduced through one or more burners into the high-temperature combustion gas stream at a flow rate in the range of 100 to 1000 m/s. The feedstock oil is preferably divided and introduced through two or more burners. Moreover, the reaction zone is preferably provided with a narrow portion to improve reaction efficiency. The narrow portion preferably has a ratio of the diameter of the narrow portion to the diameter of the part upstream of the narrow portion of 0.1 to 0.8.

In the quench zone, water spraying or other cooling methods may be performed to cool the high-temperature reaction gas to 1000 to 800°C or lower. The time from the introduction of the feedstock oil to the termination of the reaction is preferably 2 to 100 milliseconds. After the cooled carbon black is separated and recovered from the gas, it

may be subjected to known processes such as pelletization and drying.

Specifically, the feedstock oil may be, for example, a feedstock oil mixture containing: (1) at least one selected from the group consisting of aromatic hydrocarbons such as anthracene, coal hydrocarbons such as creosote oil, and petroleum heavy oils such as EHE oil (by-product oil from ethylene production) and FCC oil (fluid catalytic cracking residue); and (2) an aliphatic hydrocarbon. These feedstock oils may be modified. Among these, the feedstock oil is preferably a feedstock oil mixture containing a coal hydrocarbon and an aliphatic hydrocarbon.

Examples of the aliphatic hydrocarbon include petroleum aliphatic hydrocarbons, typically process oils, and animal and vegetable oils, typically fatty acids such as soybean oil, rapeseed oil, and palm oil.

The animal and vegetable oils include aquatic animal oils such as fatty oils (liver oils) obtained from fish livers and marine animal oils obtained from whales, terrestrial animal oils such as beef tallow and lard, and fats and oils containing fatty acid glycerides extracted from seeds, fruits, kernels, and other portions of plants.

The amount of the carbon black per 100 parts by mass of the rubber component is 5 parts by mass or more, more preferably 40 parts by mass or more, still more preferably 70 parts by mass or more, but is preferably 120 parts by mass or less, more preferably 100 parts by mass or less, still more preferably 90 parts by mass or less. When the amount falls within the range indicated above, the effects of the present invention can be more suitably achieved.

The rubber composition contains a farnesene polymer. The term "farnesene polymer" refers to a polymer produced by polymerizing farnesene and containing a structural unit derived from farnesene. Farnesene exists in isomeric forms, including α-farnesene ((3E,7E)-3,7,11-trimethyl-1,3,6,10-dodecatetraene) and β-farnesene (7,11-dimethyl-3-methylene-1,6,10-dodecatriene). Preferred is (E)-β-farnesene having the following structure:

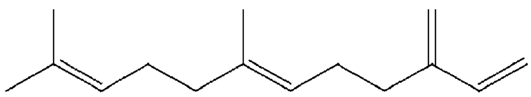

The farnesene polymer may be a homopolymer of farnesene (farnesene homopolymer) or a copolymer of farnesene and a vinyl monomer (farnesene-vinyl monomer copolymer).

Examples of the vinyl monomer include aromatic vinyl compounds such as styrene, 2-methylstyrene, 3-methylstyrene, 4-methylstyrene, α-methylstyrene, 2,4-dimethylstyrene, 2,4-diisopropylstyrene, 4-tert-butylstyrene, 5-t-butyl-2-methylstyrene, vinylethylbenzene, divinylbenzene, trivinylbenzene, divinylnaphthalene, tert-butoxystyrene, vinylbenzyldimethylamine, (4-vinylbenzyl)dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, vinylxylene, vinylnaphthalene, vinyltoluene, vinylpyridine, diphenylethylene, and tertiary amino group-containing diphenylethylene; and conjugated diene compounds such as butadiene and isoprene. These may be used alone or in combinations of two or more. Among these, styrene or butadiene is preferred. In other words, the farnesene-vinyl monomer copolymer is preferably a copolymer of farnesene and styrene (farnesene-styrene copolymer) or a copolymer of farnesene and butadiene (farnesene-butadiene copolymer), more preferably a farnesene-butadiene copolymer. The farnesene-butadiene copolymer contains a structural unit similar to that in isoprene-based rubbers and a structural unit similar to that in BR, thereby improving compatibility with isoprene-based rubbers and BR. Thus, when the carbon black and the farnesene-butadiene copolymer are incorporated into a rubber composition containing an isoprene-based rubber and BR, dispersion of the carbon black can be further promoted, resulting in better performance on ice.

The farnesene polymer is preferably a liquid farnesene polymer. The term "liquid farnesene polymer" refers to a farnesene polymer that is liquid at ordinary temperature (25°C) and may suitably be one having a weight average molecular weight (Mw) of 3, 000 to 300,000. The Mw of the liquid farnesene polymer is preferably 8,000 or more, more preferably 10,000 or more, but is preferably 100,000 or less, more preferably 60,000 or less, still more preferably 50,000 or less.

The Mw may be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

The farnesene polymer preferably has a glass transition temperature (Tg) of -100°C or higher, more preferably -78°C or higher, but preferably -10°C or lower, more preferably -30°C or lower, still more preferably -54°C or lower. When the Tg falls within the range indicated above, the effects of the present invention tend to be better achieved.

The Tg is measured at a temperature increase rate of 10°C/min using a differential scanning calorimeter (Q200, TA Instruments, Japan) in accordance with JIS-K7121:1987.

The farnesene polymer preferably has a melt viscosity of 0.1 Pa·s or more, more preferably 0.7 Pa·s or more, but preferably 500 Pa·s or less, more preferably 100 Pa·s or less, still more preferably 13 Pa·s or less. When the melt viscosity falls within the range indicated above, the effects of the present invention tend to be better achieved.

The melt viscosity is measured at 38°C using a Brookfield viscometer (Brookfield Engineering Labs. Inc.).

The ratio of farnesene to vinyl monomer (farnesene/vinyl monomer) of the farnese-vinyl monomer copolymer is preferably 40/60 to 90/10 by mass.

The farnesene polymer may be, for example, a product of KURARAY Co., Ltd.

The amount of the farnesene polymer per 100 parts by mass of the rubber component is 5 parts by mass or more, more preferably 15 parts by mass or more, but is preferably 50 parts by mass or less, more preferably 30 parts by mass or less. When the amount falls within the range indicated above, the effects of the present invention tend to be better achieved.

The rubber composition may contain a resin other than the farnesene polymer (hereinafter, referred to as additional resin).

The additional resin may be any resin commonly used in the tire industry. Examples include polyalkylene resins, coumarone-indene resins, α-methylstyrene resins, terpene resins, acrylic resins, C5 resins, and C9 resins. These resins may be used alone or in combinations of two or more. Among these, polyalkylene resins and terpene resins are preferred, with terpene resins being more preferred, because they plasticize the rubber and promote filler dispersion so that the effects of the present invention can be more suitably achieved.

The polyalkylene resins may be any resin having an alkylene-derived unit. Examples include polyethylene resins, polypropylene resins, polybutylene resins, ethylene propylene resins, ethylene propylene styrene resins, ethylene styrene resins, and propylene styrene resins. Among these, ethylene propylene resins and ethylene propylene styrene resins are preferred.

The terpene resins may be any resin having a unit derived from a terpene compound. Examples include polyterpenes (resins produced by polymerizing terpene compounds), terpene aromatic resins (resins produced by copolymerizing terpene compounds with aromatic compounds), and aromatic-modified terpene resins (resins obtained by modifying terpene resins with aromatic compounds).

The term "terpene compound" refers to a hydrocarbon having a composition represented by $(C_5H_8)_n$ or an oxygen-containing derivative thereof, each of which has a terpene backbone and is classified as, for example, a monoterpene ($C_{10}H_{16}$), sesquiterpene ($C_{15}H_{24}$), or diterpene ($C_{20}H_{32}$). Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. Other examples of the terpene compounds include resin acids (rosin acids) such as abietic acid, neoabietic acid, palustric acid, levopimaric acid, pimaric acid, and isopimaric acid. In other words, the terpene resins include rosin resins mainly containing rosin acids produced by processing rosin. Examples of the rosin resins include natural rosin resins (polymerized rosins) such as gum rosins, wood rosins, and tall oil rosins; modified rosin resins such as maleic acid-modified rosin resins and rosin-modified phenol resins; rosin esters such as rosin glycerol esters; and disproportionated rosin resins obtained by disproportionation of rosin resins.

The aromatic compounds may be any compound having an aromatic ring. Examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; and styrene and styrene derivatives such as alkylstyrenes, alkoxystyrenes, and unsaturated hydrocarbon group-containing styrenes. Styrene is preferred among these.

The additional resin preferably has a softening point of 0°C or higher, more preferably 10°C or higher, still more preferably 40°C or higher, but preferably 160°C or lower, more preferably 140°C or lower, still more preferably 100°C or lower. When the softening point falls within the range indicated above, the effects of the present invention tend to be better achieved.

In the present invention, the softening point is determined as set forth in JIS K 6220-1:2001 using a ring and ball softening point measuring apparatus and defined as the temperature at which the ball drops down.

The additional resin may be a hydrogenated resin obtained by hydrogenation . The hydrogenation may be carried out by known methods. Suitable examples of such methods include metal-catalyzed hydrogenation, and hydrazine-based hydrogenation (see, for example, JP S59-161415 A, which is hereby incorporated by reference in its entirety) . For example, the metal-catalyzed hydrogenation may be carried out by adding hydrogen under pressure in an organic solvent in the presence of a metal catalyst. Suitable examples of the organic solvent include tetrahydrofuran, methanol, and ethanol. These organic solvents may be used alone, or two or more of these may be used in admixture. Suitable examples of the metal catalyst include palladium, platinum, rhodium, ruthenium, and nickel. These metal catalysts may be used alone, or two or more of these may be used in admixture. The pressure to be applied is preferably, for example, 1 to 300 $kgf/cm^2$.

The additional resin may have a degree of hydrogenation of double bonds of 1 to 100%, preferably 2% or higher, more preferably 5% or higher, still more preferably 8% or higher. The upper limit of the degree of hydrogenation of double bonds cannot be precisely defined at present because its preferred range might change due to factors relating to hydrogenation reactions, such as advances in production technology (e.g. pressure and heating conditions, catalysts), or improvements in productivity. Under the current circumstances, it is preferably, for example, 80% or lower, more preferably 60% or lower, still more preferably 40% or lower, further preferably 30% or lower, particularly preferably 25%

or lower.

The degree of hydrogenation (hydrogenation ratio) is calculated from the integrals of the double bond peaks determined by $^1$H-NMR (proton NMR) using the equation below. The degree of hydrogenation (hydrogenation ratio) herein refers to the percentage of hydrogenated double bonds.

$$\text{Hydrogenation ratio (\%)} = ((A - B)/A) \times 100$$

A: the integral of the double bond peaks before hydrogenation B: the integral of the double bond peaks after hydrogenation

The additional resin may be, for example, a product of Mitsui Chemicals Inc., Struktol, Yasuhara Chemical Co., Ltd., Arizona Chemical, Nitto Chemical Co., Ltd., Rutgers Chemicals, Arakawa Chemical Industries, Ltd, Maruzen Petrochemical Co., Ltd., Sumitomo Bakelite Co., Ltd., Tosoh Corporation, Nippon Shokubai Co., Ltd., JX Energy Corporation, or Toagosei Co., Ltd.

The amount of the additional resin, if present, per 100 parts by mass of the rubber component is preferably 1 part by mass or more, more preferably 3 parts by mass or more, still more preferably 5 parts by mass or more, but is preferably 50 parts by mass or less, more preferably 30 parts by mass or less, still more preferably 15 parts by mass or less. When the amount falls within the range indicated above, the effects of the present invention tend to be better achieved.

The rubber composition may contain silica.

Examples of the silica include dry silica (anhydrous silicic acid) and wet silica (hydrous silicic acid) . Wet silica is preferred because it has a large number of silanol groups. These types of silica may be used alone or in combinations of two or more.

The silica preferably has a nitrogen adsorption specific surface area ($N_2SA$) of 70 $m^2/g$ or more, more preferably 150 $m^2/g$ or more, but preferably 300 $m^2/g$ or less, more preferably 200 $m^2/g$ or less. When the $N_2SA$ falls within the range indicated above, the effects of the present invention tend to be better achieved.

The $N_2SA$ of the silica is measured by the BET method in accordance with ASTM D3037-81.

The silica may be, for example, a product of Degussa, Rhodia, Tosoh Silica Corporation, Solvay Japan, or Tokuyama Corporation.

The amount of the silica, if present, per 100 parts by mass of the rubber component is preferably 30 parts by mass or more, more preferably 50 parts by mass or more, still more preferably 70 parts by mass or more, but is preferably 200 parts by mass or less, more preferably 150 parts by mass or less, still more preferably 100 parts by mass or less. When the amount falls within the range indicated above, the effects of the present invention tend to be better achieved.

The amount of carbon block based on 100% by mass in total of silica and carbon black is preferably 50% by mass or more, more preferably 80% by mass or more, and may be 100% by mass. When the amount falls within the range indicated above, the effects of the present invention tend to be better achieved.

The rubber composition containing silica preferably further contains a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used alone or in combinations of two or more. Preferred among these are mercapto silane coupling agents because the effects of the present invention tend to be better achieved.

The silane coupling agent may be, for example, a product of Degussa, Momentive, Shin-Etsu Silicone, Tokyo Chemical Industry Co., Ltd., AZmax. Co., or Dow Corning Toray Co., Ltd.

The amount of the silane coupling agent, if present, per 100 parts by mass of the silica is preferably 3 parts by mass or more, more preferably 5 parts by mass or more, but is preferably 20 parts by mass or less, more preferably 15 parts by mass or less. When the amount falls within the range indicated above, the effects of the present invention tend to be better achieved.

The rubber composition may contain an oil.

Examples of the oil include process oils, vegetable fats and oils, and mixtures thereof. Examples of the process oils include paraffinic process oils, aromatic process oils, and naphthenic process oils. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. These oils may be used alone or in combinations of two or more. Among these, process oils are preferred, with aromatic process oils being more preferred, because the effects of the present invention can be well achieved.

The amount of the oil, if present, per 100 parts by mass of the rubber component is preferably 1 part by mass or more, more preferably 5 parts by mass or more, but is preferably 30 parts by mass or less, more preferably 20 parts by mass or less. When the amount falls within the range indicated above, the effects of the present invention tend to be better achieved.

The rubber composition may contain a wax.

Non-limiting examples of the wax include petroleum waxes such as paraffin waxes and microcrystalline waxes; naturally-occurring waxes such as plant waxes and animal waxes; and synthetic waxes such as polymers of ethylene, propylene, or the like. These waxes may be used alone or in combinations of two or more. Preferred among these are petroleum waxes, with paraffin waxes being more preferred.

The wax may be may be, for example, a product of Ouchi Shinko Chemical Industrial Co., Ltd., Nippon Seiro Co., Ltd., or Seiko Chemical Co., Ltd.

In view of the balance of the above-mentioned properties, the amount of the wax, if present, per 100 parts by mass of the rubber component is preferably 0.3 parts by mass or more, more preferably 0.5 parts by mass or more, but is preferably 20 parts by mass or less, more preferably 10 parts by mass or less. When the amount falls within the range indicated above, the effects of the present invention tend to be better achieved.

The rubber composition may contain an antioxidant.

Examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)-propionate]methane. These antioxidants may be used alone or in combinations of two or more. Among these, p-phenylenediamine or quinoline antioxidants are preferred.

The antioxidant may be, for example, a product of Seiko Chemical Co., Ltd., Sumitomo Chemical Co., Ltd., Ouchi Shinko Chemical Industrial Co., Ltd., or Flexsys.

The amount of the antioxidant, if present, per 100 parts by mass of the rubber component is preferably 0.5 parts by mass or more, more preferably 1 part by mass or more, but is preferably 10 parts by mass or less, more preferably 5 parts by mass or less. When the amount falls within the range indicated above, the effects of the present invention tend to be better achieved.

The rubber composition may contain stearic acid.

The stearic acid may be a conventional one, and examples include products of NOF Corporation, Kao Corporation, Wako Pure Chemical Industries, Ltd., and Chiba Fatty Acid Co., Ltd.

The amount of the stearic acid, if present, per 100 parts by mass of the rubber component is preferably 0.5 parts by mass or more, more preferably 1 part by mass or more, but is preferably 10 parts by mass or less, more preferably 5 parts by mass or less. When the amount falls within the range indicated above, the effects of the present invention tend to be better achieved.

The rubber composition may contain zinc oxide.

The zinc oxide may be a conventional one, and examples include products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide, if present, per 100 parts by mass of the rubber component is preferably 0.5 parts by mass or more, more preferably 1 part by mass or more, but is preferably 10 parts by mass or less, more preferably 5 parts by mass or less. When the amount falls within the range indicated above, the effects of the present invention tend to be better achieved.

The rubber composition may contain sulfur.

Examples of the sulfur include those commonly used in the rubber industry, such as powdered sulfur, precipitated sulfur, colloidal sulfur, insoluble sulfur, highly dispersible sulfur, and soluble sulfur. These types of sulfur may be used alone or in combinations of two or more.

The sulfur may be, for example, a product of Tsurumi Chemical Industry Co., Ltd., Karuizawa Sulfur Co., Ltd., Shikoku Chemicals Corporation, Flexsys, Nippon Kanryu Industry Co., Ltd., and Hosoi Chemical Industry Co., Ltd.

The amount of the sulfur, if present, per 100 parts by mass of the rubber component is preferably 0.1 parts by

mass or more, more preferably 0.5 parts by mass or more, but is preferably 10 parts by mass or less, more preferably 5 parts by mass or less, still more preferably 3 parts by mass or less. When the amount falls within the range indicated above, the effects of the present invention tend to be better achieved.

The rubber composition may contain a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These vulcanization accelerators may be used alone or in combinations of two or more. Among these, sulfenamide vulcanization accelerators or guanidine vulcanization accelerators are preferred in order to more suitably achieve the effects of the present invention.

The amount of the vulcanization accelerator, if present, per 100 parts by mass of the rubber component is preferably 1 part by mass or more, more preferably 2 parts by mass or more, but is preferably 10 parts by mass or less, more preferably 7 parts by mass or less. When the amount falls within the range indicated above, the effects of the present invention tend to be better achieved.

In addition to the above components, the rubber composition may contain additives commonly used in the tire industry, such as organic peroxides, and filler such as calcium carbonate, talc, alumina, clay, aluminum hydroxide, and mica. The amount of such additives, if present, is preferably 0.1 to 200 parts by mass per 100 parts by mass of the rubber component.

The rubber composition may be prepared, for example, by kneading the components using a rubber kneading machine such as an open roll mill or a Banbury mixer, and then vulcanizing the kneaded mixture.

The rubber composition may be used in tire components, and suitably in treads, base treads, sidewalls, carcasses, or clinches, more suitably treads (cap treads).

(Pneumatic tire)

The pneumatic tire of the present invention may be produced using the rubber composition by usual methods.

Specifically, the unvulcanized rubber composition containing the components may be extruded into the shape of a tire component such as a tread and then assembled with other tire components on a tire building machine in a usual manner to build an unvulcanized tire, which may then be heated and pressurized in a vulcanizer to obtain a tire.

The pneumatic tire can be suitably used as, for example, a cold weather tire (winter tire) which requires excellent performance on ice, or as an all season tire. The term "cold weather tire" as used herein refers to any tire that is intended to be used at low temperatures and has good performance on ice or snow. Specifically, it conceptually includes any of the following tires: snow tires marked on sidewalls as M+S, M.S, or M&S, and tires for the winter season and/or cold weather sold as winter tires or studless winter tires.

EXAMPLES

The present invention will be specifically described below with reference to, but not limited to, examples.

The chemicals used in examples and comparative examples are listed below.

NR: TSR20
BR: BR150B (cis content: 98% by mass) available from Ube Industries, Ltd.
Liquid SBR: RICON100 (Mw: 5,000) available from Sartomer
Farnesene polymer 1: FB-823 (farnesene-butadiene copolymer, Mw: 50,000, copolymerization ratio: farnesene/butadiene = 80/20 by mass, melt viscosity: 13 Pa·s, Tg = -78°C) available from Kuraray Co., Ltd.
Farnesene polymer 2: FSR-221 (farnesene-styrene copolymer, Mw: 10,000, copolymerization ratio: farnesene/styrene = 77/23 by mass, melt viscosity: 5.7 Pa·s, Tg: -54°C) available from Kuraray Co., Ltd.
Farnesene polymer 3: KB-101 (farnesene homopolymer, Mw: 10,000, melt viscosity: 0.7 Pa·s, Tg: -72°C) available from Kuraray Co., Ltd.
Conventional carbon black: Diablack N220 (CTAB: 109$m^2$/g, CTAB/IA: 0.92 $m^2$/mg) available from Mitsubishi Chemical Corporation
Carbon blacks 1 to 4: carbon blacks (trial products) having the properties shown in Table 1 below
Wax: Ozoace 0355 available from Nippon Seiro Co., Ltd.
Antioxidant: NOCRAC 6C (N-(1,3-dimethylbutyl)-N'-phenyl-p-phenylenediamine) available from Ouchi Shinko Chemical Industrial Co., Ltd.

Stearic acid: stearic acid beads "Tsubaki" available from NOF Corporation
Zinc oxide: zinc oxide #2 available from Mitsui Mining & Smelting Co., Ltd.
Sulfur: powdered sulfur (oil content: 5%) available from Tsurumi Chemical industry Co., Ltd.
Vulcanization accelerator: NOCCELER NS (N-tert-butyl-2-benzothiazolylsulfenamide) available from Ouchi Shinko Chemical Industrial Co., Ltd.

[Table 1]

| | CTAB [$m^2/g$] | IA [mg/g] | CTAB/IA [$m^2/mg$] | $N_2SA$ [$m^2/g$] | 24M4 DBP [ml/100 g] | DBP [ml/100 g] |
|---|---|---|---|---|---|---|
| Carbon black 1 | 145 | 130 | 1.12 | 145 | 110 | 132 |
| Carbon black 2 | 145 | 123 | 1.18 | 148 | 112 | 129 |
| Carbon black 3 | 135 | 130 | 1.12 | 145 | 110 | 132 |
| Carbon black 4 | 145 | 133 | 1.09 | 145 | 110 | 134 |

(Examples and Comparative Examples)

The materials other than the sulfur and the vulcanization accelerator in the formulation amounts indicated in Table 2 were kneaded at 150°C for 5 minutes using a Banbury mixer (Kobe Steel, Ltd.) to give a kneaded mixture. Then, the sulfur and vulcanization accelerator were added to the kneaded mixture, and they were kneaded at 80°C for 5 minutes using an open roll mill to prepare an unvulcanized rubber composition. The unvulcanized rubber composition was formed into a tread shape and assembled with other tire components to build an unvulcanized tire. The unvulcanized tire was press-vulcanized at 170°C for 10 minutes to prepare a test tire (size: 195/65R15) . The test tires prepared as above were evaluated for the following properties. Table 2 shows the results.

(Fracture resistance)

No. 3 dumbbell rubber specimens cut from the tread of each test tire were subjected to a tensile test at room temperature in accordance with JIS K 6251 "Rubber, vulcanized or thermoplastic - Determination of tensile stress-strain properties" to measure elongation at break (EB (%)). The EB values are expressed as an index (fracture resistance index), with Comparative Example 1 set equal to 100. A higher index means a greater elongation at break (EB), indicating better fracture resistance. An index of 95 or higher is considered good.

(Abrasion resistance)

A set of test tires of each example were mounted on a front-engine, front-wheel-drive car made in Japan. The depth of the grooves on the tire tread part was measured after an 8000 km run. A distance that caused a 1 mm decrease in the depth of the tire grooves was calculated and expressed as an index (abrasion resistance index), with Comparative Example 1 set equal to 100. A higher index means a greater distance required to cause a 1 mm decrease in the depth of the tire grooves, indicating better abrasion resistance.

(Performance on ice)

A set of test tires of each example were mounted on a front-engine, front-wheel-drive car made in Japan. The car was accelerated at full throttle from a standstill on ice (0°C) over a distance of 50 m, and the time for this acceleration (acceleration time) was measured and expressed as an index (index of performance on ice), with Comparative Example 1 set equal to 100. A higher index means a shorter acceleration time, indicating better performance on ice (better starting performance on ice).

[Table 2]

| | | Example | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| Formulation (parts by mass) | NR | 60 | 60 | 60 | 60 | 60 | 60 | 60 | 60 | 60 | 60 | 60 |
| | BR | 40 | 40 | 40 | 40 | 40 | 40 | 40 | 40 | 40 | 40 | 40 |
| | Liquid SBR | – | – | – | – | – | – | 15 | 15 | – | – | – |
| | Farnesene polymer 1 | 15 | 5 | 50 | – | – | 15 | – | – | 15 | 15 | 15 |
| | Farnesene polymer 2 | – | – | – | 15 | – | – | – | – | – | – | – |
| | Farnesene polymer 3 | – | – | – | – | 15 | – | – | – | – | – | – |
| | Conventional carbon black | – | – | – | – | – | – | 70 | – | 70 | – | – |
| | Carbon black 1 | 70 | 70 | 70 | 70 | 70 | – | – | 70 | – | – | – |
| | Carbon black 2 | – | – | – | – | – | 70 | – | – | – | – | – |
| | Carbon black 3 | – | – | – | – | – | – | – | – | – | 70 | – |
| | Carbon black 4 | – | – | – | – | – | – | – | – | – | – | 70 |
| | Wax | 1 | 1 | 1 | 1 | 1 | 1 | 1 | 1 | 1 | 1 | 1 |
| | Antioxidant | 2 | 2 | 2 | 2 | 2 | 2 | 2 | 2 | 2 | 2 | 2 |
| | Stearic acid | 3 | 3 | 3 | 3 | 3 | 3 | 3 | 3 | 3 | 3 | 3 |
| | Zinc oxide | 4 | 4 | 4 | 4 | 4 | 4 | 4 | 4 | 4 | 4 | 4 |
| | Sulfur | 1 | 1 | 1 | 1 | 1 | 1 | 1 | 1 | 1 | 1 | 1 |
| | Vulcanization accelerator | 1 | 1 | 1 | 1 | 1 | 1 | 1 | 1 | 1 | 1 | 1 |
| Evaluation | Fracture resistance index | 110 | 115 | 95 | 110 | 110 | 115 | 100 | 105 | 100 | 100 | 100 |
| | Abrasion resistance index | 110 | 105 | 115 | 110 | 110 | 115 | 100 | 105 | 105 | 105 | 110 |
| | Index of performance on ice | 120 | 110 | 125 | 105 | 115 | 110 | 100 | 100 | 105 | 110 | 105 |

As shown in the Examples of Table 2, the combined use of a farnesene polymer and a specific carbon black exhibited a synergistic improving effect and resulted in significantly improved performance on ice. Moreover, the Examples also showed good abrasion resistance and good fracture resistance.

## Claims

**1.** A pneumatic tire, comprising a tread formed from a rubber composition for tires, the rubber composition comprising:

a rubber component;
a farnesene polymer; and
a carbon black having a cetyltrimethylammonium bromide adsorption specific surface area of 140 $m^2/g$ or more and a ratio (CTAB/IA) of the cetyltrimethylammonium bromide adsorption specific surface area (CTAB) to an iodine adsorption number (IA) of 1.10 or higher,
wherein the amount of the farnesene polymer per 100 parts by mass of the rubber component is 5 parts by mass or more, and
wherein the amount of the carbon black per 100 parts by mass of the rubber component is 5 parts by mass or more.

**2.** The pneumatic tire according to claim 1, wherein the farnesene polymer is a liquid farnesene polymer.

**3.** The pneumatic tire according to claim 1 or 2, wherein the farnesene polymer is a copolymer of farnesene and

butadiene.

4. The pneumatic tire according to any one of claims 1 to 3, wherein the rubber component comprises, based on 100% by mass thereof, 30% by mass or more of an isoprene-based rubber and 30% by mass or more of a polybutadiene rubber.

5. The pneumatic tire according to any one of claims 1 to 4, wherein the pneumatic tire is a cold weather tire or an all season tire.

## Patentansprüche

1. Luftreifen, welcher einen Laufstreifen umfasst, der aus einer Kautschukzusammensetzung für Reifen gebildet ist, wobei die Kautschukzusammensetzung umfasst:

   eine Kautschukkomponente;
   ein Farnesenpolymer; und
   einen Ruß mit einer spezifischen Cetyltrimethylammoniumbromid-Adsorptions-Oberfläche von 140 $m^2/g$ oder mehr und einem Verhältnis (CTAB/IA) der spezifischen Cetyltrimethylammoniumbromid-Adsorptions-Oberfläche (CTAB) zu einer Iod-Absorptions-Zahl (IA) von 1,10 oder höher,
   wobei die Menge des Farnesenpolymers pro 100 Massenteile der Kautschukkomponente 5 Massenteile oder mehr beträgt, und
   wobei die Menge des Rußes pro 100 Massenteile der Kautschukkomponente 5 Massenteile oder mehr beträgt.

2. Luftreifen nach Anspruch 1,
   wobei das Farnesenpolymer ein flüssiges Farnesenpolymer ist.

3. Luftreifen nach Anspruch 1 oder 2,
   wobei das Farnesenpolymer ein Copolymer von Farnesen und Butadien ist.

4. Luftreifen nach einem der Ansprüche 1 bis 3,
   wobei die Kautschukkomponente, bezogen auf 100% ihrer Masse, 30 Massen-% oder mehr eines Isopren-basierten Kautschuks und 30 Massen-% oder mehr eines Polybutadienkautschuks umfasst.

5. Luftreifen nach einem der Ansprüche 1 bis 4,
   wobei der Luftreifen ein Kaltwetterreifen oder ein Ganzjahresreifen ist.

## Revendications

1. Pneumatique, comprenant une bande de roulement formée à base d'une composition de caoutchouc pour pneus, la composition de caoutchouc comprenant :

   un composant caoutchouc ;
   un polymère de farnesène ; et
   un noir de carbone possédant une surface spécifique par adsorption de bromure de cétyltriméthyl ammonium égale ou supérieure à 140 $m^2/g$ et un rapport (CTAB/IA) de la surface spécifique par adsorption de bromure de cétyltriméthyl ammonium (CTAB) sur un indice d'adsorption d'iode (IA) égal ou supérieur à 1,10,
   dans lequel la quantité de polymère de farnesène par 100 parties en masse de composant caoutchouc est égale ou supérieure à 5 parties en masse, et
   dans lequel la quantité de noir de carbone par 100 parties en masse de composant caoutchouc est égale ou supérieure à 5 parties en masse.

2. Pneumatique selon la revendication 1,
   dans lequel le polymère de farnesène est un polymère de farnesène liquide.

3. Pneumatique selon la revendication 1 ou la revendication 2,
   dans lequel le polymère de farnesène est un copolymère de farnesène et de butadiène.

**4.** Pneumatique selon l'une quelconque des revendications 1 à 3,
dans lequel le composant caoutchouc comprend, sur la base de 100 % de sa masse, 30 % en masse ou plus d'un caoutchouc à base d'isoprène et 30 % en masse ou plus d'un caoutchouc polybutadiène.

**5.** Pneumatique selon l'une quelconque des revendications 1 à 4, ledit pneumatique étant un pneu pour temps froid ou un pneu pour toutes saisons.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013249423 A
- US 2014005319 A1
- US 2016194484 A1
- JP 2004043598 A
- JP 2004277443 A
- JP S59161415 A